# EUROPÄISCHE PATENTSCHRIFT

(11) **EP 0 616 220 B1**
(45) Veröffentlichungstag und Bekanntmachung des Hinweises auf die Patenterteilung: **11.06.1997**
(21) Anmeldenummer: 94103861.4
(22) Anmeldetag: 14.03.1994
(51) Int. Cl.: G01P 13/02

(54) **Vorrichtung zur Bestimmung der Strömungsgeschwindigkeit und Strömungsrichtung von Gasen oder Flüssigkeiten**
Apparatus for determining fluid flow velocity and direction
Dispositif pour la détermination de la vitesse et direction d'ecoulement de fluides

(30) Priorität: 19.03.1993 DE 4308877
(43) Veröffentlichungstag der Anmeldung: 21.09.1994
(73) Patentinhaber: TESTO GmbH & Co., D-79853 Lenzkirch (DE)
(72) Erfinder: Rombach, Martin, D-79853 Lenzkirch (DE); Streicher, Manfred, D-79853 Lenzkirch (DE)
(74) Vertreter: Patentanwälte Westphal, Buchner, Mussgnug Neunert, Göhring

(56) Entgegenhaltungen:
- DE-A- 2 218 278
- DE-B- 1 241 170
- IBM TECHNICAL DISCLOSURE BULLETIN, Bd.25, Nr.3B, 1. August 1982, NEW-YORK Seiten 1420 - 1421 PENNELL ET AL 'AIR-FLOW DIRECTION SENSOR'

## Beschreibung

Die Erfindung betrifft eine Vorrichtung zur Bestimmung der Strömungsgeschwindigkeit und Strömungsrichtung von Gasen oder Flüssigkeiten.

Aus einem Prospekt der Anmelderin, (Testovent S. 86/2) ist eine Vorrichtung bekannt, mit welcher lediglich die Größe der Strömungsgeschwindigkeit von Gasen mit Hilfe eines als Meßsonde dienenden temperaturabhängigen Widerstands, der innerhalb einer teilweise offenen Meßkammer an der Spitze eines Halterohres angeordnet ist, gemessen werden kann. Nachteil dieser Vorrichtung ist, daß mit ihr nicht die Strömungsrichtung bestimmt werden kann.

Aus der DE 2 218 278 A1 ist eine Vorrichtung zur Bestimmung der Strömungsgeschwindigkeit und Strömungsrichtung von Gasen und Flüssigkeiten mit Hilfe von temperaturabhängigen Widerständen bekannt. Hierbei ist der temperaturabhängige Widerstand in einer einseitig offenen Kammer angeordnet, die nicht durchströmt wird und damit für die Strömung einen erheblichen Widerstand darstellt, was zu Turbulenzen führt und nur eine ungenaue Messung erlaubt. Außerdem ist die Reaktionszeit bei dieser Meßmethode relativ lang.

Aus IBM Technical Disclosure Bulletin, Bd. 25, Nr. 3B, Aug. 1982, S. 1420-1421 ist ein Sensor bekannt, bei dem eine Gasströmung über ein Sensorelement geleitet wird, welches zwischen zwei sich gegenüberliegenden Öffnungen in einem Rohr angebracht ist. Durch ein thermisches Abschirmelement 19 ist der Sensor nur in einer Richtung empfindlich.

Aus DE-B-1 241 170, Spalte 1, ist ein Sensor bekannt, bei dem mit Hilfe eines Bügels 2 unterschiedlich hohe Maxima des Sensorsignales erzeugbar sind.

Aufgabe der Erfindung ist es, eine Vorrichtung zur Bestimmung der Strömungsgeschwindigkeit und Strömungsrichtung von Gasen oder Flüssigkeiten zu schaffen, die einfach und kostengünstig herzustellen ist, die einen minimalen Einfluß auf die Strömung ausübt und eine kurze Reaktionszeit besitzt.

Gelöst wird diese Aufgabe durch die im Anspruch 1 angegebenen Merkmale.

Vorteilhafte Ausführungsformen sind in den Unteransprüchen angegeben.

Die Erfindung ist anhand eines in der Zeichnung dargestellten Ausführungsbeispiels näher erläutert. Es zeigen:
- Figur 1 -: Seitenansicht eines Sondenkopfs,
- Figur 2 -: Seitenansicht gemäß Figur 1, jedoch um 180° um die Längsachse des Sondenkopfs gedreht,
- Figur 3 -: Schnitt entlang der Linie A-A gemäß Figur 1, und
- Figur 4 -: Meßdiagramm.

Der Sondenkopf 2 besteht aus einem Rohrstück 3, dessen eines Ende mit einem vorzugsweise schraubbaren, geklebten oder aufgesetzten Deckel 12 verschlossen ist und dessen anderes Ende einen kegelförmigen Anschlußansatz 18 aufweist. Parallel zur Längsachse des Rohrstücks 3 verläuft nahe des verschlossenen Endes eine erste Öffnung 6. Auf der gegenüberliegenden Seite des Rohrstücks 3 befindet sich eine zweite Öffnung 7. Die Längsausdehnungen beider Öffnungen 6 und 7 sind im wesentlichen gleich, die Querausdehnung der zweiten Öffnung 7 ist jedoch größer als diejenige der ersten Öffnung 6. Auf dem Rohrstück 3 sitzt axial verschiebbar eine Schutzhülse 4, die etwa halb so lang wie das gesamte Rohrstück 3 ist. Der Deckelanschlag 14 und der Anschlußanschlag 16, die den Verschiebeweg der Schutzhülse 4 begrenzen, besitzen etwa den gleichen Durchmesser wie die Schutzhülse 4. Am Deckel 12 ist eine Umfangsnut vorgesehen, in die ein Dichtring 10 eingesetzt ist. Durch den offenen Anschlußansatz 18 ist ein Halterohr 24 geführt, dessen Ende einen temperaturabhängigen Widerstand 22 trägt. Vorteilhafterweise handelt es sich bei dem Widerstand 22 um einen NTC Widerstand, der in einer Glasperle sitzt.

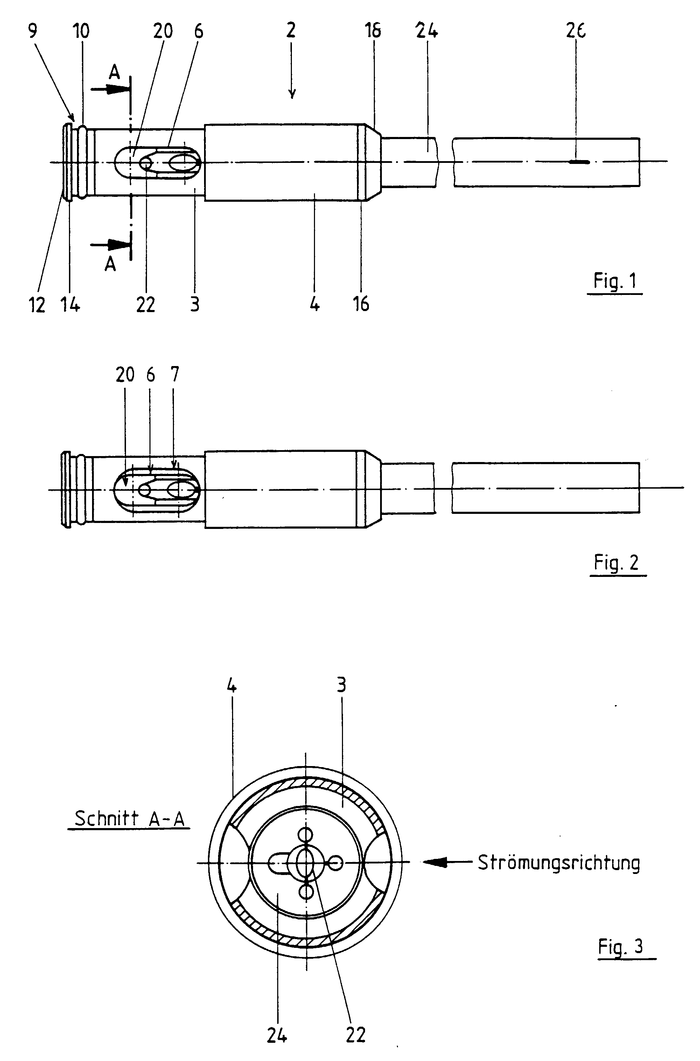

Figur 2 zeigt eine um 180° um die Achse des Rohrstücks 3 gedrehte Seitenansicht des Sondenkopfes gemäß Fig. 1. Der Innenbereich des Rohrstücks 3 zwischen beiden Öffnungen 6, 7 bildet die Meßkammer 20. Der Widerstand 22 ragt etwa bis zur Mitte der Meßkammer 20.

Figur 3 zeigt einen vergrößerten Schnitt senkrecht zur Längsachse des Rohrstücks 3 entlang der Linie A-A gemäß Fig. 1. Die Strömungsrichtung ist durch den Pfeil angegeben.

Im folgenden ist die Funktionsweise der Vorrichtung näher beschrieben.

Der Sondenkopf 2 wird in die zu messende Strömung gehalten.

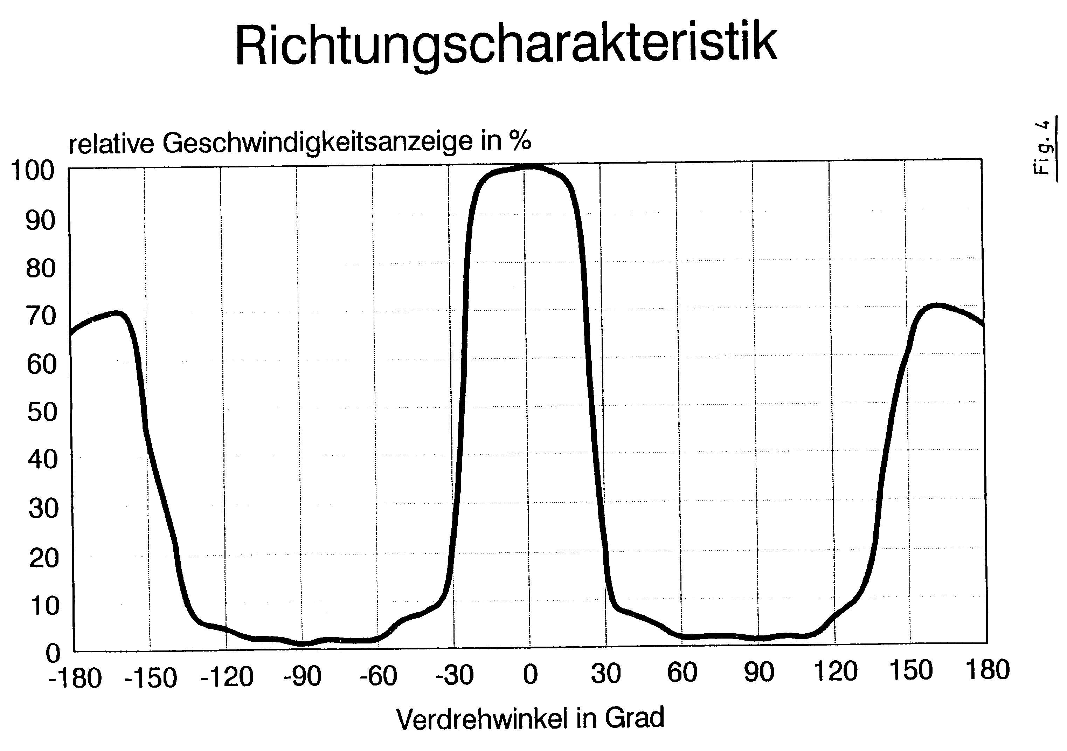

Bei zurückgefahrener Schutzhülse 4 liegen die beiden Öffnungen 6 und 7 frei. Durch eine der Öffnungen strömt das Gas oder die Flüssigkeit in die Meßkammer 20 ein, durch die andere tritt die Strömung wieder aus der Meßkammer 20 aus. Bei dem Weg durch die Meßkammer 20 umfließt der Gas- bzw Flüssigkeitsstrom den Widerstand 22 und trägt zu dessen Abkühlung bei. Die Stärke der Abkühlung ist ein Maß für die Strömungsgeschwindigkeit. Diese wird elektronisch über den Widerstandswert des Widerstands 22 ermittelt und mittels eines in der Zeichnung nicht dargestellten Meßgerätes angezeigt. Da die beiden Öffnungen 6 und 7 unterschiedliche Querschnitte besitzen, ist der Betrag des Meßwertes abhängig von der Anströmrichtung. Tritt die Strömung senkrecht durch die erste Öffnung 6 ein und durch die zweite Öffnung 7 aus, erhält man im vorliegenden Ausführungsbeispiel einen Meßwert, der unmittelbar der Strömungsgeschwindigkeit entspricht, da das Meßgerät für diese Anströmrichtung kalibriert ist. Dreht man bei konstanter Strömungsgeschwindigkeit den Sondenkopf 2 um 180° um seine Längsachse, so daß die zweite Öffnung 7 der Strömung zugewandt ist, so stellt sich ein z.B. um 30% kleinerer Meßwert ein. Bei Verdrehungen im Winkelbereich zwischen 60° und 120° geht der Meßwert unter 5% des maximalen Meßwertes zurück. Der Meßwert nimmt bei 0° und 180° ein lokales Maximum an, wie dies die Kurve gem. Figur 4 veranschaulicht.

Die Bestimmung der Strömungsrichtung erfolgt in folgender Weise:

Der in das strömende Medium eingesetzte Sondenkopf 2 wird derart ausgerichtet, daß der Meßwert ein absolutes Maximum annimmt. In dieser Stellung des Sondenkopfes 3 ist die erste Öffnung 6 der Strömung zugewandt und der Meßwert entspricht der Strömungsgeschwindigkeit. Durch eine Markierung 26 auf dem Halterohr kann nun zusätzlich noch die Richtung der Strömung abgelesen werden. Nach der Messung kann die Schutzhülse 4 über die Öffnungen 6 und 7 gefahren werden, um die Meßsonde vor Verschmutzen und Beschädigung zu schützen.

## Patentansprüche

1. Vorrichtung zur Bestimmung der Strömungsgeschwindigkeit und Strömungsrichtung von Gasen oder Flüssigkeiten mit Hilfe eines temperaturabhängigen Widerstands (22) als Meßsonde, der im Innern eines Hohlkörpers (3) zwischen zwei sich gegenüberliegenden Öffnungen (6, 7) am Ende eines drehbaren Halterohres (24) angebracht ist, wobei die Öffnungen (6, 7) derart unterschiedliche Querschnitte besitzen, daß bei senkrechter Durchströmung der Öffnungen (6, 7) in der einen Richtung bezüglich des Verdrehwinkels zur Strömungsrichtung ein relatives Maximum der Geschwindigkeitsanzeige mit anderem Wert erhalten wird als in der Gegenrichtung bei gleicher Strömungsgeschwindigkeit.

2. Vorrichtung nach Anspruch 1, dadurch gekennzeichnet, daß der Hohlkörper (3) als zylinderförmiges Rohrstück ausgebildet ist.

3. Vorrichtung nach Anspruch 2, dadurch gekennzeichnet, daß die beiden Öffnungen (6, 7) oval ausgebildet sind, und parallel zur Längsachse des Rohrstücks (3) verlaufen.

4. Vorrichtung nach einem der Ansprüche 2 oder 3, dadurch gekennzeichnet, daß auf dem Rohrstück (3) eine begrenzt verschiebbare Schutzhülse (4) formschlüssig anliegt.

5. Vorrichtung nach einem der vorhergehenden Ansprüche, dadurch gekennzeichnet, daß die beiden Öffnungen (6, 7) eine gleiche Längserstreckung, aber eine unterschiedliche Quererstreckung aufweisen.

6. Vorrichtung nach einem der vorhergehenden Ansprüche, dadurch gekennzeichnet, daß das relative Maximum der Geschwindigkeitsanzeige bei senkrechtem Strömungseintritt durch die kleinere (6) der Öffnungen als Strömungsgeschwindigkeits-Meßwert kalibriert ist.

7. Vorrichtung nach einem der vorhergehenden Ansprüche, dadurch gekennzeichnet, daß am Halterohr (24) eine Markierung (26) zum Zwecke der Richtungsbestimmung angebracht ist.

## Claims

1. Apparatus for determining the flow velocity and flow direction of gases or liquids with the aid of a temperature-dependent resistor (22) as measurement probe, which is disposed in the interior of a hollow body (3) between two mutually opposite openings (6, 7) at the end of a rotatable holding tube (24), wherein the openings (6, 7) have different cross sections which are such that, with perpendicular flow through the openings (6, 7) in the one direction relative to the angle of rotation with respect to the flow direction, a relative maximum of the velocity indication is obtained which has a value other than that in the opposite direction for the same flow velocity.

2. Apparatus according to claim 1, characterized in that the hollow body (3) is formed as a cylindrical tube section.

3. Apparatus according to claim 2, characterized in that the two openings (6, 7) are formed ovally and extend parallel to the longitudinal axis of the tube section (3).

4. Apparatus according to either of claims 2 or 3, characterized in that a protective sleeve (4) which can be moved to a limited extent rests in a form-fitting manner on the tube section (3).

5. Apparatus according to one of the preceding claims, characterized in that the two openings (6, 7) have an identical longitudinal extension, but a different transverse extension.

6. Apparatus according to one of the preceding claims, characterized in that the relative maximum of the velocity indication is calibrated for perpendicular flow entry through the smaller (6) of the openings as flow velocity measured value.

7. Apparatus according to one of the preceding claims, characterized in that a marking (26) is provided on the holding tube (24) for the purpose of determining direction.

## Revendications

1. Dispositif pour déterminer la vitesse d'écoulement et le sens de l'écoulement de gaz ou de liquides à l'aide d'une résistance (22) dépendant de la température, constituant la sonde de mesure montée entre deux ouvertures opposées (6, 7) à l'extrémité d'un tube de support (24) qui peut tourner, les ouvertures (6, 7) ayant des sections suffisamment différentes pour qu'en cas de passage perpendiculaire dans les ouvertures (6, 7), dans un sens pour l'angle de rotation, par rapport à la direction d'écoulement on atteint un maximum relatif de l'affichage de la vitesse avec une valeur différente de celle que l'on obtient dans la direction opposée pour la même vitesse d'écoulement.

2. Dispositif selon la revendication 1,
caractérisé en ce que
le corps creux (3) est un tube cylindrique.

3. Dispositif selon la revendication 2,
caractérisé en ce que
les deux ouvertures (6, 7) sont ovales et parallèles à l'axe longitudinal de l'élément de tube (3).

4. Dispositif selon l'une quelconque des revendications 2 et 3,
caractérisé par
un manchon protecteur (4) coulissant de manière limitée sur le tube de protection (3) et qui est appliqué contre celui-ci par une liaison par la forme.

5. Dispositif selon l'une quelconque des revendications 1 à 4,
caractérisé en ce que
les deux ouvertures (6, 7) ont une même longueur mais une largeur différente.

6. Dispositif selon l'une quelconque des revendications précédentes,
caractérisé en ce que
le maximum relatif de l'affichage de vitesse pour une entrée d'écoulement perpendiculaire à travers le plus petit (6) des orifices est calibré comme valeur de mesure de la vitesse d'écoulement.

7. Dispositif selon l'une quelconque des revendications précédentes,
caractérisé en ce qu'
un repère (26) est prévu sur le tube de support (24) pour déterminer le sens de circulation.
